# EUROPEAN PATENT APPLICATION

(11) **EP 2 159 902 A1**
(43) Date of publication of application: **03.03.2010**
(21) Application number: 08163033.7
(22) Date of filing: 27.08.2008
(51) Int. Cl.: H02J 7/35

(54) **Solar gardening tool and electric tool**

(71) Applicant: Chen, Yong, Yuxin Town South Lake Zone Zhejiang (CN)
(72) Inventor: Chen, Yong, Yuxin Town South Lake Zone Zhejiang (CN)
(74) Representative: Bauer, Clemens

(57) **Abstract**

The present invention discloses a solar gardening tool and a solar electric tool, comprising a controller (2), the said controller (2) has two input ends that are respectively connected to a solar panel (1) and a rectifier-filter circuit (3), input end of the rectifier-filter circuit (3) can be connected to a civil power supply, output end of the controller (2) is connected to input end of a rechargeable module (4), output end of the rechargeable module (4) is connected to the gardening tool (6) or electric tool with rechargeable battery (5) or directly connected to the rechargeable battery (5). The present invention adopts solar energy and civil power supply for the gardening tool (6) and electric tool, the solar energy is used when it is full while the power supply is automatically switched to the civil power supply by the controller (2) if the solar energy is in short supply, once tile solar energy becomes full, the power supply is automatically switched to the solar energy again. Therefore, it provides large convenience for the demand of gardening tools (6) and electric tools with large power and for using of users; also it boosts development of the gardening tools (6) and electric tools industry. Furthermore, it saves limited and non-renewable resources.

## Description

### [Technical field]

The present invention relates to the field of tools with large power, such as gardening tools and electric tools, more particularly relates to a gardening tools and an electric tools that use solar energy and civil power supply.

### [Background]

Gardening tools and electric tools now are civil power supply type, some of which use rechargeable battery that is charged through civil power supply. However, electricity is limited and non-renewable.

Now solar battery is still impossible to be used for gardening tools and electric tools due to its small power and instability. Therefore, it is rather inconvenient to use gardening tools and electric tools in places where socket of civil power supply is unavailable.

### [Summary of the invention]

The present invention aims to solve problems of existing technique and provides both a solar gardening tool and a solar electric tool that uses solar energy for power supply, and it is convenient for using of gardening tools and electric tools and also saving energy sources.

For the purpose mentioned above, the present invention provides a solar gardening tool, comprising a controller, the said controller has two input ends that are respectively connected to a solar panel and a rectifier-filter circuit, input end of the rectifier-filter circuit can be connected to a civil power supply, output end of the controller is connected to input end of a rechargeable module, output end of the rechargeable module is connected to the gardening tool with rechargeable battery or directly connected to the rechargeable battery.

Preferably, output end of the said rechargeable module is also connected to a module displaying charge status.

Preferably, the said rechargeable battery is lithium type or lithium ionization type.

Preferably, the said rechargeable battery is lead-acid type.

Preferably, the said rechargeable battery is nickel-chromium or nickel-hydrogen or nickel-manganese type.

For the purpose mentioned above, the present invention is directed to a solar electric tool, comprising a controller, the said controller has two input ends that are respectively connected to a solar panel and a rectifier-filter circuit, input end of the rectifier-filter circuit can be connected to a civil power supply, output end of the controller is connected to input end of a rechargeable module, output end of the rechargeable module is connected to the electric tool with rechargeable battery or directly connected to the rechargeable battery.

Preferably, output end of the said rechargeable module is also connected to a module displaying charge status.

Preferably, the said rechargeable battery is lithium type or lithium ionization type.

Preferably, the said rechargeable battery is lead-acid type.

Preferably, the said rechargeable battery is nickel-chromium or nickel-hydrogen or nickel-manganese type.

The present invention has beneficial effect that it adopts solar energy and civil power supply for the gardening tool and electric tool, the solar energy is used when it is full while the power supply is automatically switched to the civil power supply by the controller if the solar energy is in short supply, once the solar energy becomes full, the power supply is automatically switched to the solar energy again. Therefore, it provides large convenience for the demand of gardening tools and electric tools with large power and for use of users; also it boosts development of the gardening tools and electric tools industry. Furthermore, it saves limited and non-renewable resources.

Characteristics and strong points of the present invention are in detail illustrated by the embodiments with reference to figures.

### [Description of the accompanying drawings]

Figure 1 is structural schematic diagram of solar gardening tool according to the present invention;
Figure 2 is structural schematic diagram of solar electric tool according to the present invention;

### [Specific embodiments]

### Embodiment I:

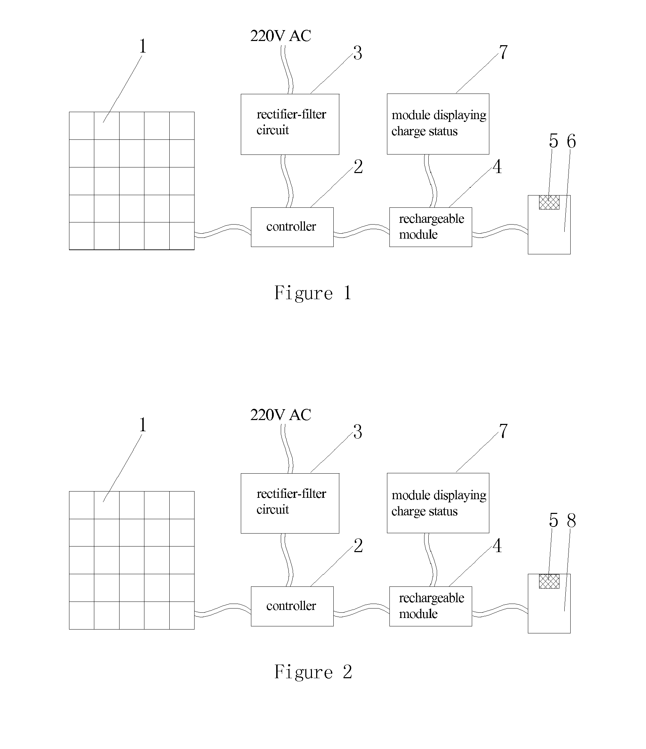

Referring to Figure 1, the solar gardening tool, comprising a controller 2, the said controller 2 has two input ends that are respectively connected to a solar panel 1 and a rectifier-filter circuit 3, input end of the rectifier-filter circuit 3 can be connected to a civil power supply, output end of the controller 2 is connected to input end of a rechargeable module 4, output end of the rechargeable module 4 is connected to the gardening tool 6 with rechargeable battery 5 or directly connected to the rechargeable battery 5. Collect solar energy through the solar panel 1, then energy is stored in the rechargeable battery 5 thorough filtering, rectifying and voltage stabilizing treatment. Output end of the said rechargeable module 4 is still connected to a module displaying charge status 7, which realtime shows power supply status and energy storage status of the rechargeable battery 5. The said rechargeable battery 5 is lithium or lithium ionization, or lead-acid type, or nickel-chromium or nickel-hydrogen or nickel-manganese type. Controller 2 and rechargeable module 4 can be integrated in a circuit board and together assembled inside shell of charger, or can be two separate part, i.e. separate charger and controller.

When sun ray is very weak, current and voltage output from the solar panel 1 are extremely low, and control elements in controller 2 automatically cut off circuit to the solar panel 1 and the power supply is automatically switches to civil power supply, that supplies power to gardening tool 6 after treatment of rectifier-filter circuit 3. When sun ray becomes strong enough to form power supply energy for gardening tool again, the controller 2 automatically cuts off connection to the rectifier-filter circuit 3, disconnect civil power supply and the power supply automatically switched to solar panel 1.

### Embodiment II:

Referring to figure 2, the solar electric tool, comprising a controller 2, the said controller 2 has two input ends that are respectively connected to a solar panel 1 and a rectifier-filter circuit 3, input end of the rectifier-filter circuit 3 can be connected to a civil power supply, output end of the controller 2 is connected to input end of a rechargeable module 4, output end of the rechargeable module 4 is connected to the electric tool 8 with rechargeable battery 5 or directly connected to the rechargeable battery 5. Difference between this embodiment and embodiment I is that application is for electric tool 8, except for which, rest of this embodiment is totally identical with embodiment I .

The present utility is not only for gardening tools and electric tools, but also for other tools, with large power, which it is inconvenient to use without civil power supply.

Embodiments above or specific features thereof can, of course, be combined to further embodiments. Any structure that is transformed simply based on the present invention is within protection range of the present invention.

## Claims

1. A solar gardening tool, **characterized in that** it comprises a controller (2), the said controller (2) has two input ends that are respectively connected to a solar panel (1) and a rectifier-filter circuit (3), input end of the rectifier-filter circuit (3) can be connected to a civil power supply, output end of the controller (2) is connected to input end of a rechargeable module (4), output end of the rechargeable module (4) is connected to the gardening tool (6) with rechargeable battery (5) or directly connected to the rechargeable battery (5).

2. The solar gardening tool as claimed in Claim 1, **characterized in that** output end of the said rechargeable module (4) is also connected to a module displaying charge status (7).

3. The solar gardening tool as claimed in Claim 1 or 2, **characterized in that** the said rechargeable battery (5) is lithium type or lithium ionization type.

4. The solar gardening tool as claimed in Claim 1 or 2, **characterized in that** the said rechargeable battery (5) is lead-acid type.

5. The solar gardening tool as claimed in Claim 1 or 2, **characterized in that** the said rechargeable battery (5) is nickel-chromium or nickel-hydrogen or nickel-manganese type.

6. A solar electric tool, **characterized in that** it comprises a controller (2), the said controller (2) has two input ends that are respectively connected to a solar panel (1) and a rectifier-filter circuit (3), input end of the rectifier-filter circuit (3) can be connected to a civil power supply, output end of the controller (2) is connected to input end of a rechargeable module (4), output end of the rechargeable module (4) is connected to the electric tool (8) with rechargeable battery (5) or directly connected to the rechargeable battery (5).

7. The solar electric tool as claimed in Claim 6, **characterized in that** output end of the said rechargeable module (4) is also connected to a module displaying charge status (7).

8. The solar electric tool as claimed in Claim 6 or 7, **characterized in that** the said rechargeable battery (5) is lithium type or lithium ionization type.

9. The solar electric tool as claimed in Claim 6 or 7, **characterized in that** the said rechargeable battery (5) is lead-acid type.

10. The solar electric tool as claimed in Claim 6 or 7, **characterized in that** the said rechargeable battery (5) is nickel-chromium or nickel-hydrogen or nickel-manganese type.
